# EUROPÄISCHE PATENTSCHRIFT

(11) **EP 1 284 183 B1**
(45) Veröffentlichungstag und Bekanntmachung des Hinweises auf die Patenterteilung: **06.09.2006**
(21) Anmeldenummer: 02017105.4
(22) Anmeldetag: 30.07.2002
(51) Int. Cl.: B29D 11/00

(54) **Vorrichtung und Verfahren zum Giessen von optischen Linsen**
Process and device for moulding optical lenses
Procédé et dispositif pour le moulage de lentilles optiques

(30) Priorität: 16.08.2001 DE 10141159
(43) Veröffentlichungstag der Anmeldung: 19.02.2003
(73) Patentinhaber: Carl Zeiss Vision GmbH, 73430 Aalen (DE)
(72) Erfinder: Haidl, Markus, Dr., 73431 Aalen (DE); Hugenberg, Norbert, Dr., 73439 Aalen (DE); Witte, Alexander, Dr., 70839 Gerlingen (DE)
(74) Vertreter: Witte, Alexander

(56) Entgegenhaltungen:
- EP-A- 0 318 164
- WO-A-01/32407
- PATENT ABSTRACTS OF JAPAN vol. 1999, no. 11, 30. September 1999 (1999-09-30) -& JP 11 170275 A (TOPCON CORP), 29. Juni 1999 (1999-06-29)

## Beschreibung

Die Erfindung betrifft eine Vorrichtung zum Gießen von optischen Linsen mit
a) einer ersten Formscheibe, die relativ zu einer Mittelachse eine runde Außenumfangsfläche mit einem ersten Durchmesser aufweist;
b) einer die erste Formscheibe umgebenden Dichtungsanordnung;
c) Mitteln zum radialen Anpressen der Dichtungsanordnung an die Außenumfangsfläche;
d) einer zweiten Formscheibe, die relativ zu einer Mittelachse eine im Wesentlichen runde Außenumfangsfläche mit einem zweiten Durchmesser aufweist, der größer als der erste Durchmesser ist;
e) Mitteln zum axialen Anpressen der zweiten Formscheibe mit deren innerer Scheibenoberfläche an eine radiale Stirnfläche der Dichtungsanordnung, derart, dass die Formscheiben im Wesentlichen parallel zueinander angeordnet sind und zwischen sich sowie zusammen mit der Dichtungsanordnung einen Formhohlraum bilden, dessen Form der Form der zu gießenden Linse entspricht, wobei die Mittel zum axialen Anpressen
   - mittels eines als Anpressring ausgebildeten Anpresselementes am Außenrand der zweiten Formscheibe angreifen,
   - auf einer der inneren Scheibenoberfläche gegenüberliegenden äußeren Scheibenoberfläche der zweiten Formscheibe angeordnet sind, und
   - von den Mitteln zum radialen Anpressen baulich getrennt und unabhängig sind.

Die Erfindung betrifft weiterhin ein Verfahren zum Gießen von optischen Linsen in einer Vorrichtung der vorstehend genannten Art.

Eine Vorrichtung und ein Verfahren der vorstehend genannten Art sind aus der WO 01/32407 A1 bekannt.

Bei der Herstellung von optischen Linsen, insbesondere optischen Linsen für Brillen, ist es bekannt, die Linsen aus Kunststoff herzustellen, um ein möglichst niedriges Gewicht, verglichen mit Glas, der Linsen zu erreichen. In diesem Zusammenhang ist es weiterhin bekannt, derartige Linsen aus Kunststoff entweder durch mechanische Bearbeitung aus einem Linsenrohling herzustellen oder aber die Linsen sogleich in ihrer endgültigen Form durch Gießen mittels einer aushärtbaren Kunststoffmasse herzustellen.

Aus der US 5 547 618 sind ein Verfahren und eine Vorrichtung zum Gießen von optischen Linsen bekannt. Dabei werden zwei Formscheiben gleichen Durchmessers verwendet, die in paralleler Anordnung zueinander zwischen zwei an ihren Umfangsflächen angreifenden Backen gehalten werden, die wiederum auf ihrer Innenseite mit Dichtungen versehen sind, so dass ein Formhohlraum entsteht, der auf zueinander parallelen Seiten von den Formscheiben und am Umfang von den Backen begrenzt wird. Die Formscheiben haben dabei auf ihrer jeweils inneren Seite bereits das Profil der herzustellenden Linse, so dass bei entsprechender Einstellung des axialen Abstandes der beiden Formscheiben zueinander der Formhohlraum gerade die Form der herzustellenden Linse aufweist.

Bei einer weiteren bekannten Vorrichtung bzw. einem zugehörigen Verfahren gemäß der eingangs bereits erwähnten WO 01/32407 A1 werden ebenfalls zwei Formscheiben verwendet, die mit gewissem Abstand zueinander angeordnet werden und deren Umfang mittels eines Dichtelementes abgedichtet ist. Bei dieser bekannten Vorrichtung haben die beiden Formscheiben jedoch einen unterschiedlichen Durchmesser. Die Formscheibe mit kleinerem Durchmesser ist dicht in einem rohrförmigen Dichtungselement aufgenommen, das an seinem der größeren Formscheibe zuweisenden Ende in einen sich radial aufweitenden Flansch ausläuft. Gegen die von diesem Flansch gebildete Radialfläche wird die zweite, größere Formscheibe unter Druck axial angepresst. Auch in diesem Falle wird der so entstehende Formhohlraum mit einer aushärtbaren Kunststoffmasse befüllt.

Der Kunststoff wird in diesem wie auch in dem weiter oben geschilderten Fall vorzugsweise durch Lichteinstrahlung ausgehärtet, zu welchem Zweck die Formscheiben für die entsprechende Wellenlänge (vorzugsweise UV-Licht) durchlässig sind. Es werden dann beidseits der Formscheiben UV-Lichtquellen angeordnet, deren Licht in den Formhohlraum fällt und damit die darin befindliche Kunststoffmasse aushärtet.

In der erwähnten WO 01/32407 A1 ist angegeben, dass zum axialen Anpressen der größeren Formscheibe an die radiale Stirnfläche des Dichtungselementes ein kreisförmiges Mittel verwendet werden soll, das auf die Formscheibe in dem Randbereich aufgesetzt wird, in dem die Formscheibe an der radialen Stirnfläche des Dichtungselementes anliegt. Vorzugsweise soll dieses Anpressmittel als Haube oder als mehrarmiges Gebilde ausgebildet sein. Die Anpresskraft für das Anpressmittel soll vorzugsweise durch Unterdruck erzeugt werden. Es ist auch die Möglichkeit beschrieben, die größere Formscheibe mittels einer separaten Positioniervorrichtung an die radiale Stirnfläche des Dichtungselements anzulegen.

Der Erfindung liegt die Aufgabe zugrunde, eine Vorrichtung und ein Verfahren der eingangs genannten Art dahingehend weiterzubilden, dass eine im praktischen Einsatz zuverlässig arbeitende Vorrichtung entsteht, bei der einerseits die größere Formscheibe mit dem erforderlichen hohen Anpressdruck gegen das Dichtungselement gedrückt werden kann, andererseits aber die Zufuhr von verschiedenen Formscheiben für verschiedene Linsen davon nicht beeinträchtigt wird. Insbesondere soll eine kompakte Bauweise der Vorrichtung ermöglicht werden, bei der sich die Bewegungsbahnen der diversen Verfahreinheiten kollisionsfrei überlappen können.

Bei einer Vorrichtung der eingangs genannten Art wird diese Aufgabe erfindungsgemäß dadurch gelöst, dass der Anpressring an seinem Umfang mit mindestens einer axial durchgehenden Aussparung versehen ist.

Bei einem Verfahren der eingangs genannten Art wird die der Erfindung zugrunde liegende Aufgabe dadurch gelöst, dass zum axialen Anlegen der zweiten Formscheibe an die radiale Stirnfläche der Dichtungsanordnung die zweite Formscheibe zunächst in einem Magazinplatz an ihrer äußeren Scheibenoberfläche mittels einer Verfahreinrichtung ergriffen, dann in eine erste Position seitlich der Mittelachse verfahren, daraufhin in radialer Richtung in eine zweite Position vor der Dichtungsanordnung versetzt und schließlich in axialer Richtung an die radiale Stirnfläche angelegt wird, wobei die Verfahreinrichtung beim Versetzen in radialer Richtung durch eine am Umfang des Anpressrings vorgesehene, axial durchgehende Aussparung geführt wird.

Die der Erfindung zugrunde liegende Aufgabe wird auf diese Weise vollkommen gelöst.

Die Erfindung hat den Vorteil, dass sehr kompakt bauende Vorrichtungen dargestellt werden können, in denen die Bewegungsbahnen der diversen Verfahreinheiten einander überlappen. Da ein Anpressring auch dann noch ein formstabiles Gebilde ist, wenn er eine Umfangsaussparung, d.h. eine Lücke aufweist, können die bereits erwähnten Vorteile des gleichmäßigen Anpressens am Außenumfang der zweiten Formscheibe beibehalten werden, ungeachtet der Tatsache, dass z.B. ein Haltearm für eine weitere Verfahreinrichtung beim Betrieb der erfindungsgemäßen Vorrichtung durch die Aussparung hindurch führen kann, so dass keine Kollision mit dem Anpressring entsteht.

Bei weiteren bevorzugten Ausführungsformen der erfindungsgemä-ßen Vorrichtung weist das Anpresselement Haltemittel für die zweite Formscheibe auf, die wahlweise formschlüssig und/oder kraftschlüssig ausgebildet sein können. In diesem Zusammenhang ist denkbar, die Haltemittel mit einem Reibebelag zu versehen, an sich bekannte Ansaugvorrichtungen vorzusehen oder dergleichen mehr.

Bei einer weiteren bevorzugten Ausführungsform der erfindungsgemäßen Vorrichtung ist das Anpressmittel mindestens an zwei Punkten des Außenrandes der zweiten Formscheibe betätigbar bzw. wird nach einer Weiterbildung des erfindungsgemäßen Verfahrens an mindestens zwei Punkten des Außenrandes der zweiten Formscheibe betätigt.

Diese Maßnahme hat den Vorteil, dass eine verwindungssteife Anordnung entsteht, bei der nicht zu befürchten ist, dass während des Anpressvorganges unzulässig hohe Biegemomente entstehen, die ein gleichmäßiges Anpressen der zweiten Formscheibe über deren Umfang hin verhindern würden. Dies wird insbesondere dann vermieden, wenn die beiden Punkte einander diametral am Umfang des Anpreßelementes gegenüber stehen.

Gemäß einer Weiterbildung des letztgenannten Ausführungsbeispiels einer erfindungsgemäßen Vorrichtung ist das Anpreßelement mittels Stangen betätigbar.

Diese Maßnahme hat den Vorteil, daß durch die Verwendung dieser sehr dünnen und langgestreckten Elemente ein relativ großer Freiraum unmittelbar hinter dem Anpreßelement entsteht, in dem weitere Aggregate angeordnet und/oder verfahren werden können.

Dies gilt insbesondere dann, wenn gemäß einer Weiterbildung der Vorrichtung die Stangen einen Abstand voneinander aufweisen, der so bemessen ist, daß eine Lichtquelle an die äußere Scheibenoberfläche der vom Anpreßelement gehaltenen zweiten Formscheibe heranfahrbar ist, bzw. wenn gemäß dem erfindungsgemäßen Verfahren die Punkte einen Abstand voneinander aufweisen und nach dem Befüllen des Formhohlraumes mit einer mittels Licht aushärtbaren Kunststoffmasse eine Lichtquelle zwischen den Punkten an die äußere Scheibenoberfläche der vom Anpreßelement gehaltenen zweiten Formscheibe herangefahren wird.

Man kann nämlich je nach Bedarf die relativ dünnen Stangen, flachen Arme oder dergleichen so weit voneinander beabstanden, daß in der bereits erwähnten Weise in genügend großer Freiraum zur Verfügung steht. Hierbei ist prinzipiell unbeachtlich, ob die beiden Stangen oder dergleichen in einer Horizontalebene oder in einer Vertikalebene oder in einer geneigten Ebene angeordnet sind, so lange die Bewegungsbahn des entsprechend zu verfahrenden Aggregates, bspw. der Lichtquellen, vorzugsweise senkrecht zu der von den Stangen aufgespannten Ebene verläuft.

Bei besonders bevorzugten Varianten der Erfindung sind in der bereits angedeuteten Weise Mittel zum Zuführen der zweiten Formscheibe aus einem Magazin vorgesehen, die eine Verfahreinrichtung umfassen. Diese Maßnahme trägt der Tatsache Rechnung, daß in einer Vorrichtung der erfindungsgemäßen Art bzw. bei einem entsprechenden Verfahren allenfalls Kleinserien von Linsen mit gleichen Parametern hergestellt werden, meistens jedoch Linsen in Einzelanfertigung, so wie sie von einem Augenarzt für einen bestimmten Patienten individuell verordnet worden sind. Das erwähnte Magazin enthält nun die für die Herstellung dieser Linsen (Brillengläser) erforderlichen Formscheiben mit den in der Praxis am häufigsten vorkommenden Daten, so daß bei einer Einzelanfertigung stets die beiden zugehörigen Formscheiben für die Vorderseite und die Hinterseite der herzustellenden Linse aus einem Magazin geholt und dann im Bereich der Dichtungsanordnung in vorbestimmtem Abstand zueinander angeordnet werden müssen.

Im Rahmen der vorliegenden Erfindung sind nun zwei alternative Vorgehensweisen vorgesehen:

Bei der ersten Vorgehensweise ist die Vorrichtung so ausgebildet, daß die zweite Formscheibe mittels der Verfahreinrichtung der radialen Stirnfläche zuführbar ist. Verfahrensmäßig wird dabei die zweite Formscheibe mittels der Verfahreinrichtung aus dem Magazin zugeführt und an die radiale Stirnfläche angelegt, wobei dann das Anpreßelement unter axialem Druck an die zweite Formscheibe herangefahren wird und danach die Verfahreinrichtung von der zweiten Formscheibe weggefahren wird.

Dies bedeutet, daß bei dieser Alternative die zweite Formscheibe an die radiale Stirnfläche herangeführt und dann vom Anpreßelement "übernommen" wird, das dann den eigentlichen Anpreßvorgang bewirkt, während zugleich die Verfahreinrichtung weggefahren wird.

Bei der zweiten Alternative ist hingegen die zweite Formscheibe mittels der Verfahreinrichtung dem Anpreßelement zuführbar. Verfahrensmäßig ausgedrückt bedeutet dies, daß die zweite Formscheibe mittels der Verfahreinrichtung aus dem Magazin zugeführt und dem Anpreßelement übergeben wird, wobei dann das Anpreßelement mit der zweiten Formscheibe unter axialem Druck an die radiale Stirnfläche herangefahren und die Verfahreinrichtung von dem Anpreßelement weggefahren wird.

Bei dieser zweiten Variante findet somit zunächst eine Übergabe von der Verfahreinrichtung auf das Anpreßelement statt, ehe dieses mit der von ihm gehaltenen zweiten Formscheibe an die Stirnfläche der Dichtungsanordnung heranfährt.

Die erstgenannte Alternative hat dabei den Vorteil, daß die Verfahreinrichtung an der weniger empfindlichen äußeren Oberfläche der zweiten Formscheibe angreift, während die zweite Alternative den Vorteil hat, daß der Bewegungsablauf einfacher ist.

Weitere Vorteile ergeben sich aus der Beschreibung der beigefügten Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine Seitenansicht, teilweise im Schnitt, durch ein Ausführungsbeispiel einer erfindungsgemäßen Vorrichtung;
- Fig. 2: die Vorrichtung gemäß Fig. 1, in perspektivischer Darstellung, teilweise aufgebrochen, zur Erläuterung weiterer Einzelheiten und Varianten der Erfindung;
- Figuren 3A bis 3E: eine Darstellung ähnlich Fig. 1, für fünf Betriebsstellungen eines ersten Ausführungsbeispiels einer erfindungsgemäßen Vorrichtung;
- Figuren 4A bis 4D: eine Darstellung, ähnlich Figuren 3A bis 3E, jedoch für ein alternatives Ausführungsbeispiel der Erfindung.

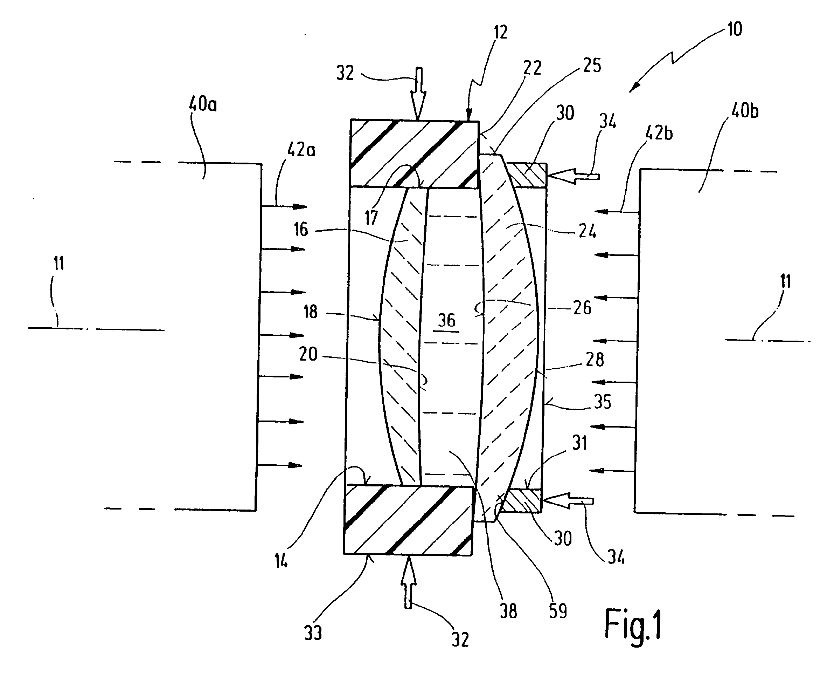

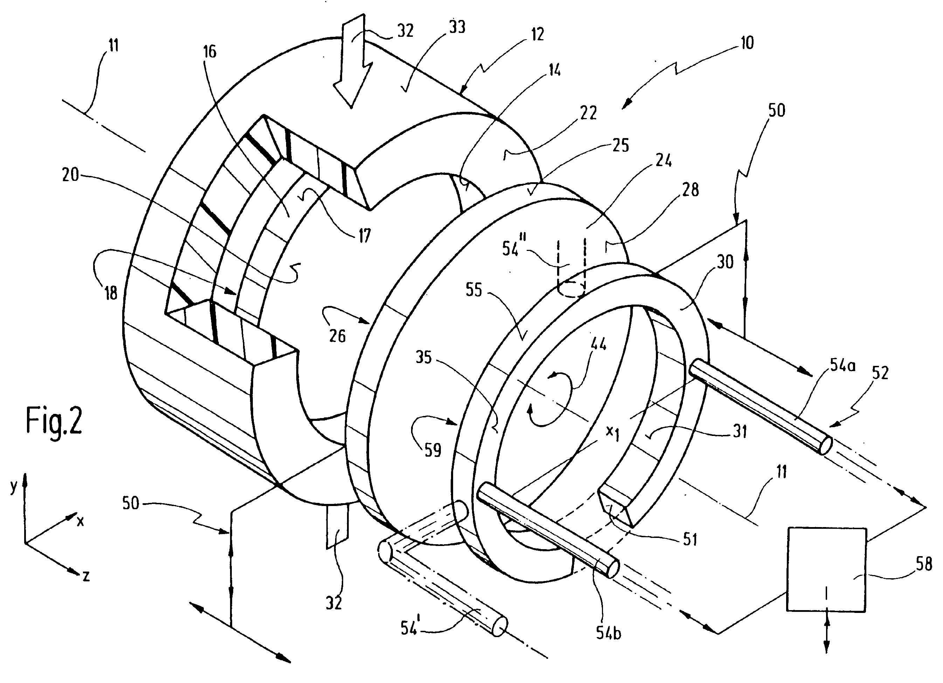

In den Figuren 1 und 2 bezeichnet 10 insgesamt eine Vorrichtung zum Gießen von optischen Linsen aus einem Kunststoffmaterial. Die Vorrichtung 10 ist entlang einer gemeinsamen Achse 11 aufgebaut.

Ein Dichtungselement 12 aus einem elastischen Kunststoff hat die Form eines kurzen Rohres mit einer zylindrischen Innenoberfläche 14. In dem Dichtungselement 12 sitzt eine erste Formscheibe 16, deren Außenumfangsfläche 17 dicht an der zylindrischen Innenoberfläche 14 des Dichtungselementes 12 anliegt. Die erste Formscheibe 16 hat eine äußere Oberfläche 18 sowie eine innere Oberfläche 20. Die äußere Oberfläche 18 ist vorzugsweise konvex ausgebildet, während die innere Oberfläche 20 je nach herzustellender Linse eine unterschiedliche Krümmung aufweisen kann.

Das Dichtungselement 12 weist an seinem in Fig. 1 rechten Ende eine radiale, kreisringförmige Stirnfläche 22 auf. An dieser radialen Stirnfläche 22 liegt eine zweite Formscheibe 24 dicht an. Deren Außenumfangsfläche ist mit 25 bezeichnet. Die zweite Formscheibe 24 weist ebenfalls eine innere Oberfläche 26 und eine äußere Oberfläche 28 auf, für die das gleiche gilt, was oben für die äußere und die innere Oberfläche 18, 20 der ersten Formscheibe 16 gesagt wurde.

Zum axialen Andrücken der zweiten Formscheibe 24 an die radiale Stirnfläche 20 dient ein Anpreßring 30. Dieser weist eine zylindrische Innenoberfläche 31 auf.

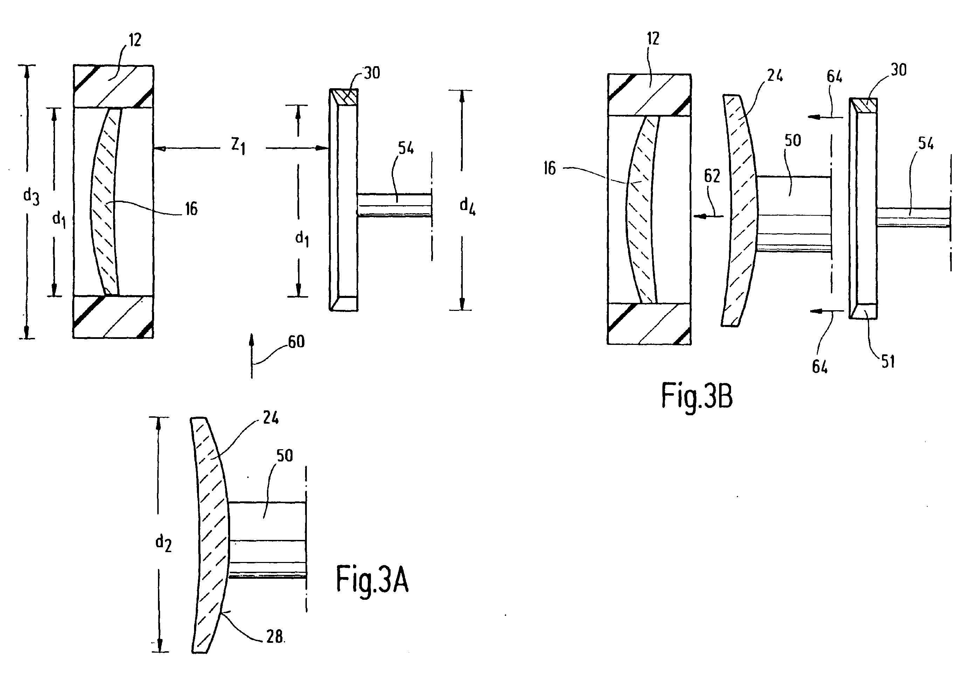

Wie man aus Fig. 3A erkennen kann, hat das Dichtungselement 12 einen Innendurchmesser d₁, der zugleich der Außendurchmesser der ersten Formscheibe 16 ist. Die zweite Formscheibe 24 hat einen Außendurchmesser d₂, der größer ist als d₁, jedoch kleiner als der Außendurchmesser des Dichtungselementes 12, der mit d₃ bezeichnet ist. Der Anpreßring 30 hat bei dem in Fig. 3A dargestellten Ausführungsbeispiel einen Außendurchmesser d₄, der kleiner ist als der Durchmesser d₂. Der Innendurchmesser des Anpreßrings 30 ist vorzugsweise so groß wie der Innendurchmesser d₁ des Dichtungselements 12.

Wenn in diesem Zusammenhang von Durchmessern die Rede ist, so versteht sich, daß im Rahmen der vorliegenden Erfindung auch nicht exakt kreisförmige Elemente verwendet werden können, insbesondere also auch im Querschnitt elliptische, tonnenförmige oder dergleichen Elemente, ohne daß dadurch der Rahmen der vorliegenden Erfindung verlassen wird.

In Fig. 1 und 2 ist mit ersten Pfeilen 32 angedeutet, daß eine radiale Anpreßkraft auf das Dichtungselement 12 im Bereich der ersten Formscheibe 16 ausgeübt wird, damit diese sicher und dicht im Dichtungselement 12 gehalten wird. Die hierzu erforderlichen Vorrichtungen sind aus den eingangs gewürdigten Dokumenten an sich bekannt und brauchen daher im vorliegenden Zusammenhang nicht nochmals erörtert zu werden. Gemeinsam ist dabei, daß eine radiale Kraft auf eine Außenumfangsfläche 33 des Dichtungselementes 12 ausgeübt wird.

Mit zweiten Pfeilen 34 ist in entsprechender Weise angedeutet, daß der Anpreßring 30 in axialer Richtung (relativ zur gemeinsamen Längsachse 11) von in Fig. 1 rechts auf die zweite Formscheibe 24 drückt und diesen damit an die radiale Stirnfläche 22 anpreßt. Die axiale Anpreßkraft auf den Anpreßring 30 kann dabei im Bereich einer äußeren radialen Stirnfläche 34 des Anpreßrings 30 angreifen.

Wenn die beiden Anpreßkräfte (Pfeile 32 und 34) wirksam sind, ist zwischen den Formscheiben 16 und 24 sowie dem Dichtungselement 12 ein Formhohlraum 36 definiert, dessen Form gerade der Form der herzustellenden Linse entspricht. Zu diesem Zweck kann die erste Formscheibe 16 mit (nicht dargestellten) Mitteln entlang der Achse 11 verfahren werden, um die Linsendicke einzustellen. Zur Herstellung eines vorgegebenen Zylinders ist die erste Formscheibe 16 überdies vorzugsweise um die Achse 11 noch drehbar. Dies ist in Fig. 2 mit einem dritten Pfeil 44 angedeutet.

Jedenfalls wird der Formhohlraum 36 schlußendlich mit einer aushärtbaren Kunststoffmasse 38 ausgefüllt. Dann werden von beiden Seiten Lichtquellen 40a und 40b herangefahren, deren Licht 42a, 42b eine Wellenlänge hat, bei der die Kunststoffmasse 38 ausgehärtet wird. Dies ist üblicherweise für UV-Licht bei den üblichen Monomeren der Fall, wie sie für die Linsenherstellung normalerweise eingesetzt werden. Es versteht sich, daß die Formscheiben 16, 24 zu diesem Zweck für die entsprechende Lichtwellenlänge durchlässig sind.

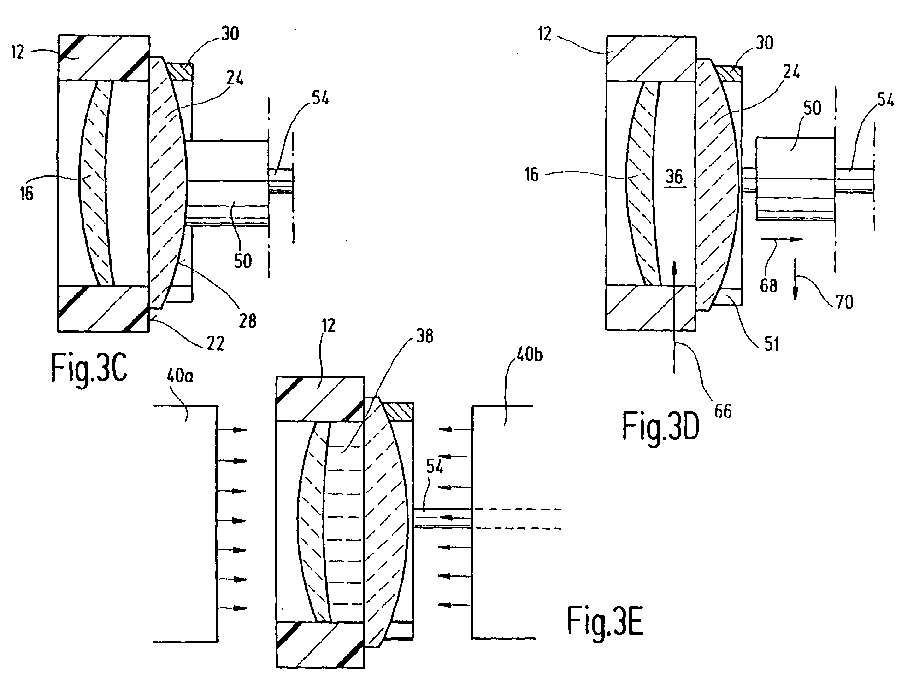

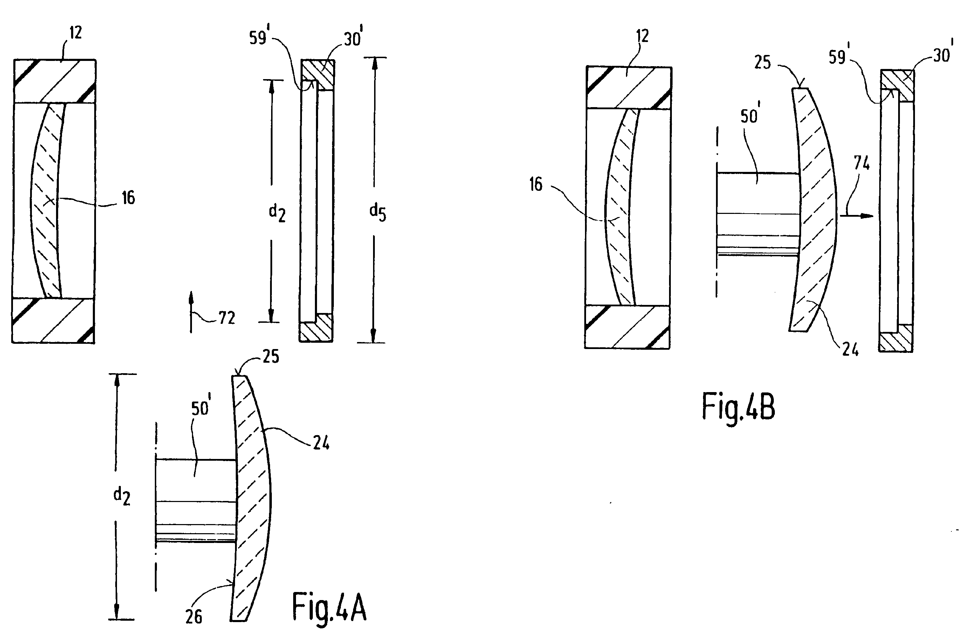

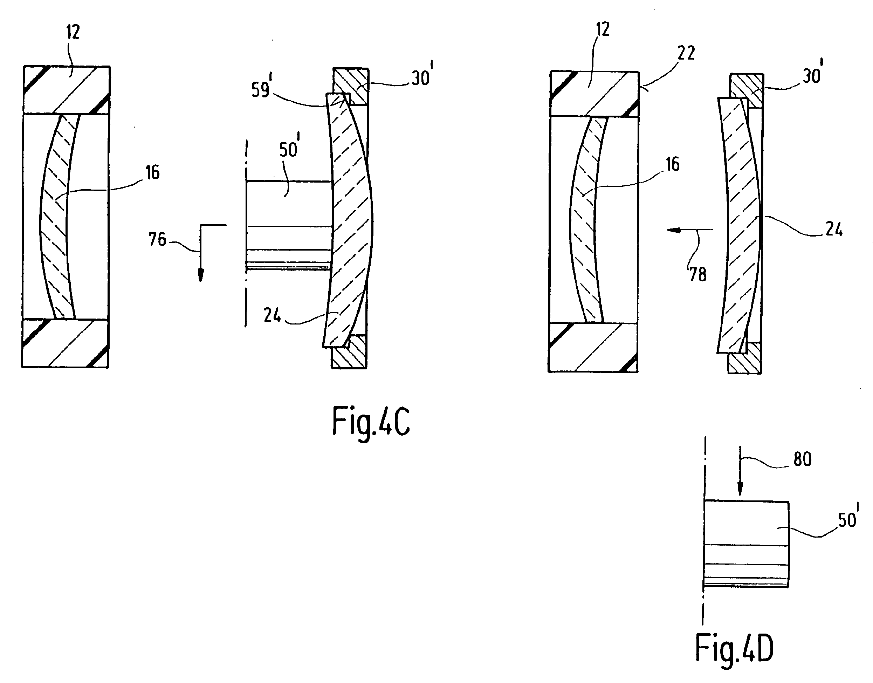

In Fig. 2 ist mit 50 eine erste Verfahreinrichtung angedeutet, mit der es möglich ist, die zweite Formscheibe 24 in die dort gezeigte Position zu verfahren. Die erste Verfahreinrichtung 50 kann zu diesem Zweck nahezu beliebig im Raum verfahren werden, bspw. entlang der drei Achsen des in Fig. 2 eingezeichneten kartesischen Koordinatensystem x, y, z. Einzelheiten dazu werden weiter unten anhand der Figuren 3 und 4 noch erläutert werden.

Um eine Kollision von Halte- und Führungselementen der ersten Verfahreinrichtung 50 und/oder von Verfahreinrichtungen für die Lichtquellen 40b mit dem Anpreßring 30 zu vermeiden, insbesondere, wenn auch dieser im Raum verfahren wird, ist der Anpreßring 30 mit mindestens einer axial durchgehenden Aussparung bzw. Lücke 51 an seinem Umfang versehen. Diese Aussparung 51 dient als Durchgang für die erwähnten Halte- und Führungselemente anderer Verfahreinrichtungen.

Mit 52 ist in Fig. 2 eine zweite Verfahreinrichtung bezeichnet, die zum Verfahren des Anpreßrings 30 dient. Auch in diesem Falle gilt, daß alle denkbaren Verfahrvorgänge im Raum ausgeführt werden können, bspw. entlang der drei Achsen des bereits erwähnten kartesischen Koordinatensystems.

Bei dem dargestellten Ausführungsbeispiel sind zwei Stangen 54a, 54b vorgesehen, die an der äußeren radialen Stirnfläche 35 des Anpreßrings 30 angreifen. Die Stangen 54a, 54b sind an diametral gegenüberliegenden Punkten mit der äußeren radialen Stirnfläche 35 verbunden. Sie verlaufen vorzugsweise zueinander parallel und haben einen Abstand x₁, der die lichte Weite, d.h. den Freiraum, zwischen den beiden Stangen 54a, 54b bestimmt.

Sollte der durch den Abstand x₁ definierte Zwischenraum im Einzelfall nicht ausreichen, können die Stangen auch an der Außenumfangsfläche 55 des Anpreßrings 30 angreifen und dann vorzugsweise abgekröpft ausgebildet sein, so wie in Fig. 2 mit 54' angedeutet. Ferner versteht sich, daß die Stangen 54 keineswegs in einer Horizontalebene angeordnet sein müssen, sondern ebensogut in einer Vertikalebene liegen können, wie mit 54'' in Fig. 2 angedeutet. Auch geneigte Anordnungen sind selbstverständlich denkbar. In jedem Falle ist bevorzugt, wenn die Bewegungsbahn des durch den Freiraum zwischen den Stangen 54 hindurchfahrenden Aggregates senkrecht zu der von den Stangen aufgespannten Ebene verläuft, um eine möglichst weitgehende Kollisionsfreiheit zu gewährleisten.

Mit 58 ist in Fig. 2 eine Betätigungseinheit schematisch angedeutet, die zum Verfahren des Anpreßrings 30 in der vorgegebenen Weise eingesetzt wird und die letztendlich auch den Anpreßdruck in z-Richtung, d.h. zur Achse 11 erzeugt. Die Betätigungseinheit 58 kann von jeder beliebigen üblichen Bauart sein, also insbesondere elektromotorisch, hydraulisch oder pneumatisch arbeiten.

Die Funktionsweise der in den Figuren 1 und 2 dargestellten Vorrichtung 10 soll nun anhand von fünf Darstellungen von Arbeitsstellungen in den Figuren 3A bis 3E erläutert werden.

Fig. 3A zeigt dabei die Ausgangsstellung, wobei an den diversen Elementen die jeweiligen Durchmesser in der bereits erläuterten Weise eingetragen sind. Es versteht, daß gerade diese Darstellungen gemäß Fig. 3 extrem schematisiert sind und daher weder maßstäblich noch im Hinblick auf die gezeigten Elemente irgendeine Einschränkung darstellen.

In der Ausgangsstellung gemäß Fig. 3A befindet sich die erste Verfahreinrichtung 50 noch weit außerhalb, vorzugsweise unterhalb des Freiraums, der durch einen Abstand z₁ zwischen dem Dichtungselement 12 und dem Anpreßring 30 durch axiales Verfahren des Anpreßrings 30 hergestellt ist. Die erste Verfahreinrichtung 50 weist vorzugsweise ein Rohr auf, das mit einer an seiner Mündung angeordneten Dichtung an die äußere Oberfläche 28 der zweiten Formscheibe 24 heranfährt, wenn sich diese an einem vorbestimmten Magazinplatz befindet. Wenn dann ein Unterdruck in dem Rohr erzeugt wird, wird die zweite Formscheibe 24 von der ersten Verfahreinrichtung 50 mitgenommen.

In Fig. 3A ist mit einem Pfeil 60 angedeutet, daß die erste Verfahreinrichtung 50 nunmehr in Bewegung gesetzt wird, um in den Zwischenraum (z₁) zwischen Dichtungselement 12 und Anpreßring 30 verfahren zu werden, derart, daß sich alle erwähnten Elemente in koaxialer Anordnung zur gemeinsamen Mittelachse 11 befinden.

Dieser Zustand ist in Fig. 3B erreicht. Aus der Betriebsstellung gemäß Fig. 3B wird nun die erste Verfahreinrichtung 50 nach links in z-Richtung verfahren, wobei zweckmäßigerweise der Anpreßring 30 unmittelbar nachfolgt und sich von hinten an die zweite Formscheibe 24 annähert. Um während dieser Bewegungsphase Kollisionen zwischen Halte- oder Führungselementen der ersten Verfahreinrichtung 50 mit dem Anpreßring 30 zu vermeiden, ist die bereits erwähnte Aussparung 51 im Anpreßring 30 vorgesehen.

Das sich einstellende Ergebnis ist in Fig. 3C dargestellt. In dieser Betriebsstellung "übernimmt" der Anpreßring 30 die zweite Formscheibe 24 von der ersten Verfahreinrichtung 50. Dies geschieht dadurch, daß die erste Verfahreinrichtung 50 die zweite Formscheibe 24 zunächst lose oder mit geringem Druck an die radiale Stirnfläche 22 des Dichtungselementes 12 anlegt. Der Anpreßring 30 wird nun weiter an die äußere Oberfläche 28 der zweiten Formscheibe 24 herangefahren und überbrückt die Anpreßkraft der ersten Verfahreinrichtung 50.

Fig. 3D zeigt, daß nunmehr der Formhohlraum 36 konfiguriert worden ist. Mit einem siebten Pfeil 66 ist angedeutet, daß nunmehr die Kunststoffmasse 38 in den Formhohlraum 36 eingebracht werden kann.

Gleichzeitig kann sich die erste Verfahreinrichtung 50 von der zweiten Formscheibe 24 lösen, indem diese in z-Richtung nach rechts verfahren wird, wie mit einem achten Pfeil 68 gezeigt. Gleichzeitig oder unmittelbar darauf kann die erste Verfahreinrichtung 50 dann wieder seitlich oder nach unten weggefahren werden, wie mit einem neunten Pfeil 70 gezeigt.

In Fig. 3D ist nun eine Situation wie in Fig. 1 dargestellt, in der nämlich die Lichtquellen 40a, 40b herangefahren wurden, um die Kunststoffmasse 38 auszuhärten.

Aus Fig. 3E erkennt man auch deutlich, daß die Stangen 54 dabei nicht im Wege stehen, weil sie im seitlichen Abstand von den Lichtquellen 40a, 40b verlaufen.

Bei der in Fig. 4A bis 4D dargestellten Variante sind die Verhältnisse zunächst baulich insoweit etwas anders, als ein Anpreßring 30' mit einem Durchmesser d₅ verwendet wird, der größer ist als der Durchmesser d₂ der zweiten Formscheibe 24. Der Anpreßring 30' hat an seiner in Fig. 4A linken Seite eine Anlagefläche 59', die zur Aufnahme der Außenumfangsfläche 25 der zweiten Formscheibe 24 dient. Dies kann formschlüssig, kraftschlüssig, durch Ansaugen oder dergleichen geschehen.

Die Ausgangssituation ist ferner deswegen anders, weil die erste Verfahreinrichtung 50' beim Ausführungsbeispiel gemäß Fig. 4A nunmehr von der inneren Oberfläche 26 an der zweiten Formscheibe 24 angreift.

Aus der Ausgangsstellung gemäß Fig. 4A, die sinngemäß der gemäß Fig. 3A entspricht, fährt nun die erste Verfahreinrichtung 50' nach oben (10. Pfeil 72). Im Zwischenraum zwischen dem Dichtungselement 12 und dem Anpreßring 30' angelangt (Fig. 4B) fährt die erste Verfahreinrichtung 50' nun in z-Richtung nach rechts (11. Pfeil 74) und setzt die zweite Formscheibe 24 mit deren Außenumfangsfläche 25 in die Anlagefläche 59' des Anpreßrings 30' ein.

Nachdem die zweite Formscheibe 42 dem Anpreßring 30' übergeben wurde (Fig. 4C), kann die erste Verfahreinrichtung 50 wieder in z-Richtung nach links und dann nach unten weggefahren werden (12. Pfeil 76).

Der Anpreßring 30' nimmt nun die zweite Formscheibe 24 mit und verfährt sie in z-Richtung nach links (Pfeil 78), bis sie in Anlage an die radiale Stirnfläche 22 des Dichtungselementes 12 gelangt und dort durch axiale Kraft fixiert wird. Derweil ist die erste Verfahreinrichtung 50' seitlich ganz weggefahren (14. Pfeil 80).

Die Vorrichtung befindet sich nun in einer Position analog der gemäß Fig. 3D, so daß analog zu der Stellung gemäß Fig. 3E nunmehr der Gießvorgang erfolgen kann.

## Patentansprüche

1. Vorrichtung zum Gießen von optischen Linsen mit
a) einer ersten Formscheibe (16), die relativ zu einer Mittelachse (11) eine runde Außenumfangsfläche (17) mit einem ersten Durchmesser (d₁) aufweist;
b) einer die erste Formscheibe (16) umgebenden Dichtungsanordnung (12);
c) Mitteln zum radialen Anpressen (32) der Dichtungsanordnung (12) an die Außenumfangsfläche (17);
d) einer zweiten Formscheibe (24), die relativ zu einer Mittelachse (11) eine im Wesentlichen runde Außenumfangsfläche (25) mit einem zweiten Durchmesser (d₂) aufweist, der größer als der erste Durchmesser (d₁) ist;
e) Mitteln (30, 54, 58) zum axialen Anpressen (34) der zweiten Formscheibe (24) mit deren innerer Scheibenoberfläche (26) an eine radiale Stirnfläche (22) der Dichtungsanordnung (12), derart, dass die Formscheiben (16, 24) im Wesentlichen parallel zueinander angeordnet sind und zwischen sich sowie zusammen mit der Dichtungsanordnung (12) einen Formhohlraum (36) bilden, dessen Form der Form der zu gießenden Linse entspricht, wobei die Mittel (30, 54, 58) zum axialen Anpressen (34)
- mittels eines als Anpressring (30) ausgebildeten Anpresselementes am Außenrand der zweiten Formscheibe (24) angreifen,
- auf einer der inneren Scheibenoberfläche (26) gegenüberliegenden äußeren Scheibenoberfläche (28) der zweiten Formscheibe (24) angeordnet sind, und
- von den Mitteln zum radialen Anpressen (32) baulich getrennt und unabhängig sind,
**dadurch gekennzeichnet, dass** der Anpressring (30) an seinem Umfang mit mindestens einer axial durchgehenden Aussparung (51) versehen ist.

2. Vorrichtung nach Anspruch 1, **dadurch gekennzeichnet, dass** das Anpresselement formschlüssige Haltemittel für die zweite Formscheibe (24) aufweist.

3. Vorrichtung nach Anspruch 1 oder 2, **dadurch gekennzeichnet, dass** das Anpresselement kraftschlüssige Haltemittel für die zweite Formscheibe (24) aufweist.

4. Vorrichtung nach einem oder mehreren der Ansprüche 1 bis 3, **dadurch gekennzeichnet, dass** das Anpresselement mindestens an zwei Punkten des Außenrandes der zweiten Formscheibe (24) betätigbar ist.

5. Vorrichtung nach Anspruch 4, **dadurch gekennzeichnet, dass** die Punkte auf einer radialen Stirnfläche (35) des Anpresselementes liegen.

6. Vorrichtung nach Anspruch 4, **dadurch gekennzeichnet, dass** die Punkte auf einer Umfangsfläche (55) des Anpresselementes liegen.

7. Vorrichtung nach einem oder mehreren der Ansprüche 4 bis 6, **dadurch gekennzeichnet, dass** das Anpresselement mittels Stangen (54) betätigbar ist.

8. Vorrichtung nach Anspruch 7, **dadurch gekennzeichnet, dass** die Stangen (54) einen Abstand (x₁) voneinander aufweisen, der so bemessen ist, dass eine Lichtquelle (40b) an die äußere Scheibenoberfläche (28) der vom Anpresselement gehaltenen zweiten Formscheibe (24) heranfahrbar ist.

9. Vorrichtung nach einem oder mehreren der Ansprüche 1 bis 8, **dadurch gekennzeichnet, dass** Mittel zum Zuführen der zweiten Formscheibe (24) aus einem Magazin vorgesehen sind, die eine Verfahreinrichtung (50) umfassen, und dass die zweite Formscheibe (24) mittels der Verfahreinrichtung (50) der radialen Stirnfläche (22) zuführbar ist.

10. Vorrichtung nach einem oder mehreren der Ansprüche 1 bis 8, **dadurch gekennzeichnet, dass** Mittel zum Zuführen der zweiten Formscheibe (24) aus einem Magazin vorgesehen sind, die eine Verfahreinrichtung (50') umfassen, und dass die zweite Formscheibe (24) mittels der Verfahreinrichtung (50') dem Anpresselement zuführbar ist.

11. Verfahren zum Gießen von optischen Linsen in einer Vorrichtung (10) mit
a) einer ersten Formscheibe (16), die relativ zu einer Mittelachse (11) eine runde Außenumfangsfläche (17) mit einem ersten Durchmesser (d₁) aufweist;
b) einer die erste Formscheibe (16) umgebenden Dichtungsanordnung (12);
c) Mitteln zum radialen Anpressen (32) der Dichtungsanordnung (12) an die Außenumfangsfläche (17);
d) einer zweiten Formscheibe (24), die relativ zu einer Mittelachse (11) eine im wesentlichen runde Außenumfangsfläche (25) mit einem zweiten Durchmesser (d₂) aufweist, der größer als der erste Durchmesser (d₁) ist;
e) Mitteln (30, 54, 58) zum axialen Anpressen (34) der zweiten Formscheibe (24) mit deren innerer Scheibenoberfläche (26) an eine radiale Stirnfläche (22) der Dichtungsanordnung (12), derart, dass die Formscheiben (16, 24) im Wesentlichen parallel zueinander angeordnet sind und zwischen sich sowie zusammen mit der Dichtungsanordnung (12) einen Formhohlraum (36) bilden, dessen Form der Form der zu gießenden Linse entspricht, wobei die Mittel (30, 54, 58) zum axialen Anpressen (34)
- mittels eines als Anpressring (30) ausgebildeten Anpresselementes am Außenrand der zweiten Formscheibe (24) angreifen,
- auf einer der inneren Scheibenoberfläche (26) gegenüberliegenden äußeren Scheibenoberfläche (28) der zweiten Formscheibe (24) angeordnet sind, und
- von den Mitteln zum radialen Anpressen (32) baulich getrennt und unabhängig sind,
**dadurch gekennzeichnet, dass** zum axialen Anlegen der zweiten Formscheibe (24) an die radiale Stirnfläche (22) der Dichtungsanordnung (12) die zweite Formscheibe (24) zunächst in einem Magazinplatz an ihrer äußeren Scheibenoberfläche (28) mittels einer Verfahreinrichtung (50) ergriffen, dann in eine erste Position seitlich der Mittelachse (11) verfahren, daraufhin in radialer Richtung (60) in eine zweite Position vor der Dichtungsanordnung (12) versetzt und schließlich in axialer Richtung (62) an die radiale Stirnfläche (22) angelegt wird, wobei die Verfahreinrichtung (50) beim Versetzen in radialer Richtung (62) durch eine am Umfang des Anpressrings (30) vorgesehene, axial durchgehende Aussparung (51) geführt wird.

12. Verfahren nach Anspruch 11, **dadurch gekennzeichnet, dass** nach dem Anlegen der zweiten Formscheibe (24) an die radiale Stirnfläche (22) das Anpresselement unter axialem Druck an die zweite Formscheibe (24) herangefahren wird und dass danach die Verfahreinrichtung von der zweiten Formscheibe (24) weggefahren wird.

13. Verfahren nach Anspruch 11 oder 12, **dadurch gekennzeichnet, dass** das Anpresselement mindestens an zwei Punkten des Außenrandes der zweiten Formscheibe (24) betätigt wird.

14. Verfahren nach Anspruch 13, **dadurch gekennzeichnet, dass** die Punkte einen Abstand (x₁) voneinander aufweisen, und dass nach dem Befüllen des Formhohlraumes (36) mit einer mittels Licht aushärtbaren Kunststoffmasse (38) eine Lichtquelle (40b) zwischen den Punkten an die äußere Scheibenoberfläche (28) der vom Anpresselement gehaltenen zweiten Formscheibe (24) herangefahren wird.

## Claims

1. An apparatus for molding optical lenses comprising:
a) a first molding shell (16) having a rounded peripheral surface (17) with a first diameter (d₁), relative to a central axis (11);
b) a sealing element (12) surrounding the first molding shell (16);
c) means (32) for radially clamping the sealing element (12) against the peripheral surface (17);
d) a second molding shell (24) having an essentially rounded peripheral surface (25) with a second diameter (d₂), relative to a central axis (11), the second diameter (d₂) being greater than the first diameter (d₁) ;
e) means (30, 54, 58) for axially clamping (34) the second molding shell (24) with its inner shell surface (26) against a radial front surface (22) of the sealing element (12), such that the molding shells (16, 24) are arranged essentially parallel to each other, a hollow cavity (36) being enclosed between the molding shells (12, 14) and the sealing element (12) and having a shape corresponding to the shape of the lens to be molded, the means (30, 54, 58) for axially clamping
- engaging the second molding shell (24) with a clamping element configured as a clamping ring (30) at the peripheral rim of the second molding shell (26),
- being positioned on an outer shell surface (28) of the second molding shell (28) opposite to the inner shell surface (26), and
- being structurally distinct and independent from the radial clamping means (32),
**characterized in that** the clamping ring (30) is provided at its periphery with at least one gap (51) extending axially therethrough.

2. The apparatus of claim 1, **characterized in that** the clamping element is provided with means for positively engaging the second molding shell (24).

3. The apparatus of claim 1 or 2, **characterized in that** the clamping element is provided with means for frictionally engaging the second molding shell (24).

4. The apparatus of one or more of claims 1 to 3, **characterized in that** the clamping element is adapted to be actuated on at least two points on the peripheral rim of the second molding shell (24).

5. The apparatus of claim 4, **characterized in that** the points lie on a radial front surface (35) of the clamping element.

6. The apparatus of claim 4, **characterized in that** the points lie on a peripheral surface (55) of the clamping element.

7. The apparatus of one or more of claims 4 to 6, **characterized in that** the clamping element is adapted to be actuated by means of rods (54).

8. The apparatus of claim 7, **characterized in that** the rods (54) have a distance (x₁) between them being such that a source of light (40b) may be approached towards the outer shell surface (28) of the second molding shell (24) when the second molding shell (24) is held by the clamping element.

9. The apparatus of one or more of claims 1 to 8, **characterized in that** means are provided for feeding the second molding shell (24) from a magazine, the means comprising a displacement unit (50), and that the second molding shell (24) is adapted to be fed to the radial front surface (22) by means of the displacement unit (50).

10. The apparatus of one or more of claims 1 to 8, **characterized in that** means are provided for feeding the second molding shell (24) from a magazine, the means comprising a displacement unit (50'), and that the second molding shell (24) is adapted to be fed to the clamping element by means of the displacement unit (50').

11. A method for molding optical lenses in an apparatus (10) comprising:
a) a first molding shell (16) having a rounded peripheral surface (17) with a first diameter (d₁), relative to a central axis (11);
b) a sealing element (12) surrounding the first molding shell (16);
c) means (32) for radially clamping the sealing element (12) against the peripheral surface (17);
d) a second molding shell (24) having an essentially rounded peripheral surface (25) with a second diameter (d₂), relative to a central axis (11), the second diameter (d₂) being greater than the first diameter (d₁);
e) means (30, 54, 58) for axially clamping (34) the second molding shell (24) with its inner shell surface (26) against a radial front surface (22) of the sealing element (12), such that the molding shells (16, 24) are arranged essentially parallel to each other, a hollow cavity (36) being enclosed between the molding shells (12, 14) and the sealing element (12) and having a shape corresponding to the shape of the lens to be molded, the means (30, 54, 58) for axially clamping
- engaging the second molding shell (24) with a clamping element configured as a clamping ring (30) at the peripheral rim of the second molding shell (26),
- being positioned on an outer shell surface (28) of the second molding shell (24) opposite to the inner shell surface (26), and
- being structurally distinct and independent from the radial clamping means (32),
**characterized in that** for axially clamping the second molding shell (24) to the radial front surface (22) of the sealing element, the second molding shell (24), when in a magazine position, is first gripped at its outer shell surface (28) by means of a displacement unit (50), is then displaced into a first position lateral to the central axis (11), is subsequently offset in a radial direction (60) into a second position in front of the sealing element (12), and is finally applied against the radial front surface (22) in an axial direction (62), the displacement unit, when being offset in the radial direction (62), is guided through a gap (51) provided in the clamping ring (30) and extending therethrough.

12. The method of claim 12, **characterized in that** after the application of the second molding shell (24) to the radial front surface (22), the clamping element is approached to the second molding shell (24), and that thereafter the displacement unit 50 is moved away from the second molding shell (24).

13. The method of claim 111 or 12, **characterized in that** the clamping element is actuated on at least two points at the peripheral rim of the second molding shell (24).

14. The method of claim 13, **characterized in that** the points have a distance (x₁) one from the other, and that after filling the hollow cavity (36) with a plastic material (38) adapted to be polymerized by means of light, a source of light (40b) is approached between the points towards the outer shell surface (28) of the second molding shell (24) being held by the clamping element.

## Revendications

1. Dispositif pour le moulage de lentilles optiques comprenant
a) un premier disque de moulage (16), qui présente par rapport à un axe médian (11) une surface périphérique extérieure (17) ronde avec un premier diamètre (d₁) ;
b) un dispositif d'étanchéité (12) entourant le premier disque de moulage (16) ;
c) des moyens pour comprimer (32) radialement le dispositif d'étanchéité (12) sur la surface périphérique extérieure (17) ;
d) un second disque de moulage (24) qui présente par rapport à un axe médian (11) une surface périphérique extérieure (25) sensiblement ronde avec un second diamètre (d₂) qui est supérieur au premier diamètre (d₁) ;
e) des moyens (30, 54, 58) pour la compression axiale (34) du second disque de moulage (24) par sa surface de disque (26) intérieure sur une face frontale (22) radiale du dispositif d'étanchéité (12), de telle sorte que les disques de moulage (16, 24) sont disposés sensiblement parallèlement entre eux et forment entre eux ainsi que conjointement avec le dispositif d'étanchéité (12) une cavité de moulage (36), dont la forme correspond à la forme de la lentille à mouler, les moyens (30, 54, 58) pour la compression axiale (34)
- s'appliquant au moyen d'un élément de compression conçu comme bague de compression (30) sur le bord extérieur du second disque de moulage (24),
- sont disposés sur une surface de disque (28), faisant face à la surface de disque (26) intérieure, du second disque de moulage (24), et
- sont séparés au plan de la construction et indépendants des moyens pour la compression (32) radiale,
**caractérisé en ce que** la bague de compression (30) est dotée sur son pourtour d'au moins un évidement (51) continu axialement.

2. Dispositif selon la revendication 1, **caractérisé en ce que** l'élément de compression présente des moyens de retenue complémentaires au niveau de la forme pour le second disque de moulage (24).

3. Dispositif selon la revendication 1 ou 2, **caractérisé en ce que** l'élément de compression présente des moyens de retenue en force pour le second disque de moulage (24).

4. Dispositif selon l'une ou plusieurs des revendications 1 à 3, **caractérisé en ce que** l'élément de compression peut être actionné au moins en deux points du bord extérieur du second disque de moulage (24).

5. Dispositif selon la revendication 4, **caractérisé en ce que** les points se situent sur une face frontale (35) radiale de l'élément de compression.

6. Dispositif selon la revendication 4, **caractérisé en ce que** les points se situent sur une surface périphérique (55) de l'élément de compression.

7. Dispositif selon l'une ou plusieurs des revendications 4 à 6, **caractérisé en ce que** l'élément de compression peut être actionné au moyen de tiges (54).

8. Dispositif selon la revendication 7, **caractérisé en ce que** les tiges (54) présentent un espacement (x₁) entre elles qui est dimensionné de telle sorte qu'une source lumineuse (40b) peut être rapprochée de la surface de disque (28) extérieure du second disque de moulage (24) maintenu par l'élément de compression.

9. Dispositif selon l'une ou plusieurs des revendications 1 à 8, **caractérisé en ce que** des moyens sont prévus pour l'amenée du second disque de moulage (24) à partir d'un magasin, qui comprennent un dispositif de déplacement (50), et **en ce que** le second disque de moulage (24) peut être amené au moyen du dispositif de déplacement (50) à la face frontale (22) radiale.

10. Dispositif selon l'une ou plusieurs des revendications 1 à 8, **caractérisé en ce que** des moyens pour l'amenée du second disque de moulage (24) à partir d'un magasin sont prévus, lesquels comprennent un dispositif de déplacement (50'), et **en ce que** le second disque de moulage (24) peut être amené au moyen du dispositif de déplacement (50') à l'élément de compression.

11. Procédé pour le moulage de lentilles optiques dans un dispositif (10) comprenant
a) un premier disque de moulage (16), qui présente par rapport à un axe médian (11) une surface périphérique extérieure (17) ronde avec un premier diamètre (d₁) ;
b) un dispositif d'étanchéité (12) entourant le premier disque de moulage (16) ;
c) des moyens pour la compression (32) radiale du dispositif d'étanchéité (12) sur la surface périphérique extérieure (17) ;
d) un second disque de moulage (24) qui présente par rapport à un axe médian (11) une surface périphérique extérieure (25) sensiblement ronde avec un second diamètre (d₂) qui est supérieur au premier diamètre (d₁);
e) des moyens (30, 54, 58) pour la compression axiale (34) du second disque de moulage (24) par sa surface de disque (26) intérieure sur une face frontale (22) radiale du dispositif d'étanchéité (12), de sorte que les disques de moulage (16, 24) sont disposés sensiblement parallèlement entre eux et forment conjointement avec le dispositif d'étanchéité (12) une cavité de moulage (36), dont la forme correspond à la forme de la lentille à mouler, les moyens (30, 54, 58) pour la compression (34) axiale
- s'appliquant au moyen d'un élément de compression conçu comme bague de compression (30) sur le bord extérieur du second disque de moulage (24),
- étant disposés sur une surface de disque (28), faisant face à la surface de disque (28) intérieure, du second disque de moulage (24) et
- étant séparés au niveau de la construction et indépendants des moyens pour la compression (32) radiale,
**caractérisé en ce que**, pour l'application axiale du second disque de moulage (24) sur la face frontale (22) radiale du dispositif d'étanchéité (12), le second disque de moulage (24) est saisi d'abord dans un emplacement de magasin par sa surface de disque (28) extérieure au moyen d'un dispositif de déplacement (50), est déplacé ensuite dans une première position sur le côté de l'axe médian (11), est déplacé ensuite dans le sens radial (60) dans une seconde position devant le dispositif d'étanchéité (12) et est placé enfin dans la direction radiale (62) contre la face frontale (22) radiale, le dispositif de déplacement (50) étant guidé lors du déplacement dans le sens radial (62) par un évidement (51) prévu sur le pourtour de la bague de compression (30) et continu axialement.

12. Procédé selon la revendication 11, **caractérisé en ce que**, après la pose du second disque de moulage (24) contre la face frontale (22) radiale, l'élément de compression est rapproché sous pression axiale du second disque de moulage (24) et **en ce que** le dispositif de déplacement est éloigné ensuite du second disque de moulage (24).

13. Procédé selon la revendication 11 ou 12, **caractérisé en ce que** l'élément de compression est actionné au moins en deux points du bord extérieur du second disque de moulage (24).

14. Procédé selon la revendication 13, **caractérisé en ce que** les points présentent un espacement (x₁) l'un de l'autre et **en ce que**, après le remplissage de la cavité de moulage (36) avec une masse plastique (38) durcissable avec de la lumière, une source lumineuse (40b) est rapprochée entre les points de la surface de disque (28) extérieure du second disque de moulage (24) maintenu par l'élément de compression.
